# EUROPEAN PATENT APPLICATION

(11) **EP 2 527 952 A1**
(43) Date of publication of application: **28.11.2012**
(21) Application number: 12166792.7
(22) Date of filing: 27.08.2008
(51) Int. Cl.: G06F 1/16, G06F 3/048

(54) **Portable electronic device including touchscreen and method of controlling the portable electronic device**

(62) Divisional of application: 08163042.8
(71) Applicant: Research In Motion Limited, Waterloo, ON N2L 3W8 (CA)
(72) Inventor: Kwok, Jordanna, Waterloo, Ontario N2V 2Y1 (CA); Bells, Matthew, Waterloo, Ontario N2L 6M2 (CA); Lhotak, Jennifer Elizabeth, Waterloo, Ontario N2L 2W4 (CA)
(74) Representative: Fennell, Gareth Charles

(57) **Abstract**

A method of controlling a portable electronic device having a touchscreen display includes determining a first orientation of the portable electronic device, rendering a first virtual keyboard and a first data display area on the touchscreen display based on the first orientation of the portable electronic device, automatically detecting a change from the first orientation to a second orientation of the portable electronic device, and automatically reconfiguring the touchscreen display by rendering a second virtual keyboard, a second data display area, and data previously displayed in the first data display area in the second data display area on the touchscreen display based on the second orientation of the portable electronic device.

## Description

The present disclosure relates generally to portable electronic devices that include touchscreen displays for displaying a virtual keyboard.

Electronic devices, including portable electronic devices, have gained widespread use and can provide a variety of functions including, for example, telephonic, electronic messaging and other personal information manager (PIM) application functions. Portable electronic devices can include several types of devices including mobile stations such as simple cellular telephones, smart telephones, wireless PDAs, and laptop computers with wireless 802.11 or Bluetooth capabilities. These devices run on a wide variety of networks from data-only networks such as Mobitex and DataTAC to complex voice and data networks such as GSM/GPRS, CDMA, EDGE, UMTS and CDMA2000 networks.

Devices such as PDAs or smart telephones are generally intended for handheld use and ease of portability. Smaller devices are generally desirable for portability. Touch screen devices constructed of a display, such as a liquid crystal display, with a touch-sensitive overlay are useful on such handheld devices as such handheld devices are small and are therefore limited in space available for user input and output devices. Further, the screen content on the touch screen devices can be modified depending on the functions and operations being performed.

A virtual keyboard can be provided on such touch screen devices for user interaction. Such keyboards include full keyboards with keys sized to fit the touch screen device. Virtual keyboards provided in portrait orientation suffer from the disadvantage that the keys may be small and therefore difficult to accurately select. While virtual keyboards provided in the landscape orientation with a data display provided above the virtual keyboard are desirable for typing using the thumbs, the area for data display may be considered small or the aspect ratio may be undesirable.

Improvements in portable electronic devices having touch screen displays are therefore desirable.

### GENERAL

According to one aspect, there may be provided a method of controlling a portable electronic device having a touchscreen display. The method may comprise determining a first orientation of the portable electronic device, rendering a first virtual keyboard and a first data display area on the touchscreen display based on the first orientation of the portable electronic device, automatically detecting a change from the first orientation to a second orientation of the portable electronic device, and automatically reconfiguring the touchscreen display by rendering a second virtual keyboard, a second data display area, and data previously displayed in the first data display area in the second data display area on the touchscreen display based on the second orientation of the portable electronic device.

According to another aspect, there may be provided a portable electronic device. The portable electronic device includes a housing, a touch-sensitive input and display device connected to the housing and exposed for user-interaction therewith, and functional components in the housing. The functional components may comprise an accelerometer, a memory device and a processor operably connected to the touch-sensitive input and display device, the accelerometer and the memory device for executing a program stored in the memory to cause the portable electronic device to determine a first orientation of the portable electronic device, render a first virtual keyboard and a first data display area on the touchscreen display based on the first orientation of the portable electronic device, automatically detect a change from the first orientation to a second orientation of the portable electronic device, and automatically reconfigure the touchscreen display by rendering a second virtual keyboard, a second data display area, and data previously displayed in the first data display area in the second data display area on the touchscreen display based on the second orientation of the portable electronic device.

According to yet another aspect, there may be provided a computer-readable medium having computer-readable code embodied therein for execution by a processor in a portable electronic device comprising a touchscreen display, for determining a first orientation of the portable electronic device, rendering a first virtual keyboard and a first data display area on the touchscreen display based on the first orientation of the portable electronic device, automatically detecting a change from the first orientation to a second orientation of the portable electronic device, and automatically reconfiguring the touchscreen display by rendering a second virtual keyboard, a second data display area, and data previously displayed in the first data display area in the second data display area on the touchscreen display based on the second orientation of the portable electronic device.

Preferably, the keyboard and display area may be automatically determined based on the orientation of the device when in use. Thus, the keyboard provided may be determined based on the orientation. The keyboard can be reconfigured for providing in an "upright" position depending on the orientation. The keyboard can also be reconfigured for providing a user with a full keyboard or a reduced keyboard as desired. The data display area is also reconfigured for providing an upright display above the keyboard. This reconfiguration may occur automatically and can be carried out during use the device. Thus, a user may not held to a landscape or a portrait orientation when in an application during use of the device. After inputting data into the device using the keyboard in one of the landscape or portrait orientations in an application, the device can be reoriented and the display reconfigured so that a new keyboard and data display area are rendered. The data displayed in the data display area may then be displayed in the new data display area for the new orientation. Thus, the data is not lost, providing increased efficiency as the user can then continue to input data using the new keyboard.

### BRIEF DESCRIPTION OF THE DRAWINGS

Embodiments of the present disclosure will now be described, by way of example only, with reference to the attached Figures, wherein:

Figure 1 is a simplified block diagram of components including internal components of a portable electronic device according an aspect of an embodiment;

Figure 2 is a front view of an exemplary portable electronic device including a virtual keyboard and data display area shown in portrait mode;

Figure 3 is a flow chart illustrating a method of controlling the portable electronic device in accordance with an aspect of an embodiment; and

Figure 4 is a front view of an exemplary portable electronic device including a virtual keyboard and data display area shown in a landscape mode.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers and the like.

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). The portable electronic device may also be a portable device without wireless communication capabilities as a handheld electronic game device, digital photograph album, digital camera and the like.

Reference is first made to the Figures to describe an embodiment of a portable electronic device including a touchscreen display and a method of controlling the portable electronic device. The method incldues determining a first orientation of the portable electronic device, rendering a first virtual keyboard and a first data display area on the touchscreen display based on the first orientation of the portable electronic device, automatically detecting a change from the first orientation to a second orientation of the portable electronic device, and automatically reconfiguring the touchscreen display by rendering a second virtual keyboard, a second data display area, and data previously displayed in the first data display area in the second data display area on the touchscreen display based on the second orientation of the portable electronic device.

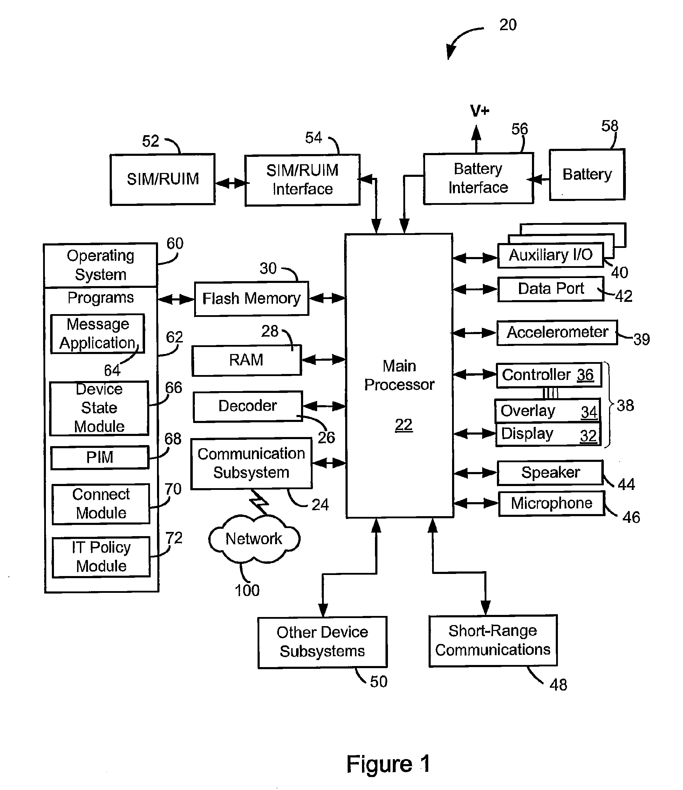

Referring to Figure 1, there is shown therein a block diagram of an exemplary embodiment of a portable electronic device 20. The portable electronic device 20 includes a number of components such as the processor 22 that controls the overall operation of the portable electronic device 20. Communication functions, including data and voice communications, are performed through a communication subsystem 24. Data received by the portable electronic device 20 can be decompressed and decrypted by a decoder 26, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 24 receives messages from and sends messages to a wireless network 100. In this exemplary embodiment of the portable electronic device 20, the communication subsystem 24 is configured in accordance with the Global System for Mobile Communication (GSM) and General Packet Radio Services (GPRS) standards. The GSM/GPRS wireless network is used worldwide. New standards, such as Enhanced Data GSM Environment (EDGE) and Universal Mobile Telecommunications Service (UMTS) are believed to have similarities to the network behavior described herein, and it will also be understood by persons skilled in the art that the embodiments described herein are intended to use any other suitable standards that are developed in the future. The wireless-link connecting the communication subsystem 24 with the wireless network 100 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 100 associated with the portable electronic device 20 is a GSM/GPRS wireless network in one exemplary implementation, other wireless networks may also be associated with the portable electronic device 20 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA1000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems.

The processor 22 also interacts with additional subsystems such as a Random Access Memory (RAM) 28, a flash memory 30, a display 32 with a touch-sensitive overlay 34 connected to an electronic controller 36 that together make up a touch screen display 38, an accelerometer 39, an auxiliary input/output (I/O) subsystem 40, a data port 42, a speaker 44, a microphone 46, short-range communications 48 and other device subsystems 50. The touch-sensitive overlay 34 and the electronic controller 36 provide a touch-sensitive input device and the processor 22 interacts with the touch-sensitive overlay 34 via the electronic controller 36.

Some of the subsystems of the portable electronic device 20 perform communication-related functions, whereas other subsystems may provide "resident" or on-device functions. By way of example, the display 32 and the touch-sensitive overlay 34 may be used for both communication-related functions, such as entering a text message for transmission over the network 100, and device-resident functions such as a calculator or task list.

The accelerometer 39 includes a cantilever beam with a proof mass and suitable deflection sensing circuitry. The accelerometer is used for detecting direction of gravitational forces (or gravity-induced reaction forces). Movement of the portable electronic device 20 to alternate orientations is detected and the orientation of the accelerometer 39 and therefore of the portable electronic device 20 can be determined.

The portable electronic device 20 can send and receive communication signals over the wireless network 100 after network registration or activation procedures have been completed. Network access is associated with a subscriber or user of the portable electronic device 20. To identify a subscriber according to the present embodiment, the portable electronic device 20 uses a SIM/RUIM card 52 (i.e. Subscriber Identity Module or a Removable User Identity Module) inserted into a SIMIRUIM interface 54 for communication with a network such as the network 100. The SIMIRUIM card 52 is one type of a conventional "smart card" that can be used to identify a subscriber of the portable electronic device 20 and to personalize the portable electronic device 20, among other things. In the present embodiment the portable electronic device 20 is not fully operational for communication with the wireless network 100 without the SIM/RUIM card 52. By inserting the SIM/RUIM card 52 into the SIM/RUIM interface 54, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card 52 includes a processor and memory for storing information. Once the SIM/RUIM card 52 is inserted into the SIM/RUIM interface 54, it is coupled to the processor 22. In order to identify the subscriber, the SIM/RUIM card 52 can include some user parameters such as an International Mobile Subscriber Identity (IMSI). An advantage of using the SIMIRUIM card 52 is that a subscriber is not necessarily bound by any single physical portable electronic device. The SIM/RUIM card 52 may store additional subscriber information for a portable electronic device as well, including datebook (or calendar) information and recent call information. Alternatively, user identification information can also be programmed into the flash memory 30.

The portable electronic device 20 is a battery-powered device and includes a battery interface 56 for receiving one or more rechargeable batteries 58. In at least some embodiments, the battery 58 can be a smart battery with an embedded microprocessor. The battery interface 56 is coupled to a regulator (not shown), which assists the battery 58 in providing power V+ to the portable electronic device 20. Although current technology makes use of a battery, future technologies such as micro fuel cells may provide the power to the portable electronic device 20.

The portable electronic device 20 also includes an operating system 60 and software components 62 to 72 which are described in more detail below. The operating system 60 and the software components 62 to 72 that are executed by the processor 22 are typically stored in a persistent store such as the flash memory 30, which may alternatively be a read-only memory (ROM) or similar storage element (not shown). Those skilled in the art will appreciate that portions of the operating system 60 and the software components 62 to 72, such as specific device applications, or parts thereof, may be temporarily loaded into a volatile store such as the RAM 28. Other software components can also be included, as is well known to those skilled in the art.

The subset of software applications 62 that control basic device operations, including data and voice communication applications, will normally be installed on the portable electronic device 20 during its manufacture. Other software applications include a message application 64 that can be any suitable software program that allows a user of the portable electronic device 20 to send and receive electronic messages. Various alternatives exist for the message application 64 as is well known to those skilled in the art. Messages that have been sent or received by the user are typically stored in the flash memory 30 of the portable electronic device 20 or some other suitable storage element in the portable electronic device 20. In at least some embodiments, some of the sent and received messages may be stored remotely from the device 20 such as in a data store of an associated host system that the portable electronic device 20 communicates with.

The software applications can further include a device state module 66, a Personal Information Manager (PIM) 68, and other suitable modules (not shown). The device state module 66 provides persistence, i.e. the device state module 66 ensures that important device data is stored in persistent memory, such as the flash memory 30, so that the data is not lost when the portable electronic device 20 is turned off or loses power.

The PIM 68 includes functionality for organizing and managing data items of interest to the user, such as, but not limited to, e-mail, contacts, calendar events, voice mails, appointments, and task items. A PIM application has the ability to send and receive data items via the wireless network 100. PIM data items may be seamlessly integrated, synchronized, and updated via the wireless network 100 with the portable electronic device subscriber's corresponding data items stored and/or associated with a host computer system. This functionality creates a mirrored host computer on the portable electronic device 20 with respect to such items. This can be particularly advantageous when the host computer system is the portable electronic device subscriber's office computer system.

The portable electronic device 20 also includes a connect module 70, and an information technology (IT) policy module 72. The connect module 70 implements the communication protocols that are required for the portable electronic device 20 to communicate with the wireless infrastructure and any host system, such as an enterprise system, that the portable electronic device 20 is authorized to interface with.

The connect module 70 includes a set of APls that can be integrated with the portable electronic device 20 to allow the portable electronic device 20 to use any number of services associated with the enterprise system. The connect module 70 allows the portable electronic device 20 to establish an end-to-end secure, authenticated communication pipe with the host system. A subset of applications for which access is provided by the connect module 70 can be used to pass IT policy commands from the host system to the portable electronic device 20. This can be done in a wireless or wired manner. These instructions can then be passed to the IT policy module 72 to modify the configuration of the device 20. Alternatively, in some cases, the IT policy update can also be done over a wired connection.

Other types of software applications can also be installed on the portable electronic device 20. These software applications can be third party applications, which are added after the manufacture of the portable electronic device 20. Examples of third party applications include games, calculators, utilities, etc.

The additional applications can be loaded onto the portable electronic device 20 through at least one of the wireless network 100, the auxiliary I/O subsystem 40, the data port 42, the short-range communications subsystem 48, or any other suitable device subsystem 50. This flexibility in application installation increases the functionality of the portable electronic device 20 and may provide enhanced on-device functions, communication-related functions, or both. For example, secure communication applications may enable electronic commerce functions and other such financial transactions to be performed using the portable electronic device 20.

The data port 42 enables a subscriber to set preferences through an external device or software application and extends the capabilities of the portable electronic device 20 by providing for information or software downloads to the portable electronic device 20 other than through a wireless communication network. The alternate download path may, for example, be used to load an encryption key onto the portable electronic device 20 through a direct and thus reliable and trusted connection to provide secure device communication.

The data port 42 can be any suitable port that enables data communication between the portable electronic device 20 and another computing device. The data port 42 can be a serial or a parallel port. In some instances, the data port 42 can be a USB port that includes data lines for data transfer and a supply line that can provide a charging current to charge the battery 58 of the portable electronic device 20.

The short-range communications subsystem 48 provides for communication between the portable electronic device 20 and different systems or devices, without the use of the wireless network 100. For example, the short-range communications subsystem 48 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download is processed by the communication subsystem 24 and input to the processor 22. The processor 22 then processes the received signal for output to the display 32 or alternatively to the auxiliary I/O subsystem 40. A subscriber may also compose data items, such as e-mail messages, for example, using the touch-sensitive overlay 34 on the display 32 that are part of the touch screen display 38, and possibly the auxiliary I/O subsystem 40. The auxiliary subsystem 40 may include devices such as: a mouse, track ball, infrared fingerprint detector, or a roller wheel with dynamic button pressing capability. A composed item may be transmitted over the wireless network 100 through the communication subsystem 24.

For voice communications, the overall operation of the portable electronic device 20 is substantially similar, except that the received signals are output to the speaker 44, and signals for transmission are generated by the microphone 46. Alternative voice or audio I/O subsystems, such as a voice message recording subsystem, can also be implemented on the portable electronic device 20. Although voice or audio signal output is accomplished primarily through the speaker 44, the display 32 can also be used to provide additional information such as the identity of a calling party, duration of a voice call, or other voice call related information.

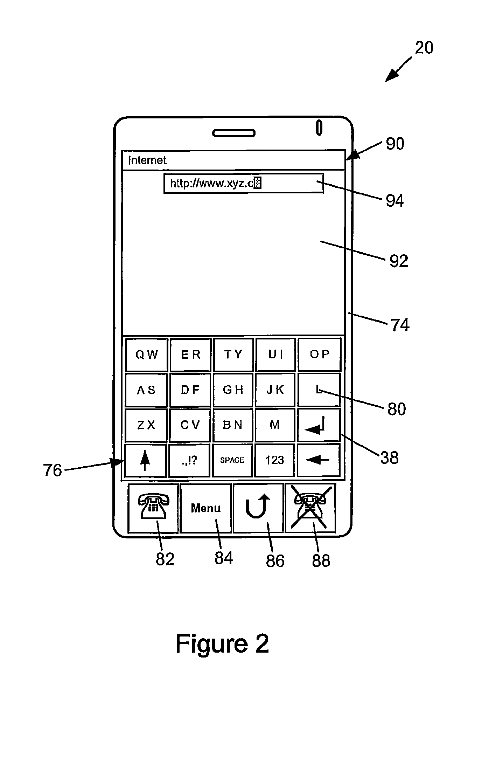

Reference is now made to Figure 2, which shows a front view of an exemplary portable electronic device 20 in portrait orientation. The portable electronic device 20 includes a housing 74 that houses the internal components that are shown in Figure 1 and frames the touch screen display 38 such that the touch screen display 38 is exposed for user-interaction therewith when the portable electronic device 20 is in use. In the exemplary orientation shown in Figure 2, the touch screen display 38 includes a portrait mode virtual keyboard 76 for user entry of data in the form of, for example, text during operation of the portable electronic device 20. It will be appreciated that such a virtual keyboard may be used for data entry in any suitable application such as in an electronic mail application, during electronic mail composition or in any other suitable application. The portrait mode virtual keyboard 76 of Figure 2 is provided for data entry in an Internet browser application and is shown as a reduced keyboard for exemplary purposes. The present disclosure is not limited to the portrait mode virtual keyboard 76 shown as other keyboards including other reduced keyboards or full keyboards are possible.

The touch screen display 38 can be any suitable touch screen display such as a capacitive touch screen display. A capacitive touch screen display 38 includes the display 32 and the touch-sensitive overlay 34, in the form of a capacitive touch-sensitive overlay 34. It will be appreciated that the capacitive touch-sensitive overlay 34 includes a number of layers in a stack and is fixed to the display 32 via a suitable optically clear adhesive. The layers can include, for example a substrate fixed to the LCD display 32 by a suitable adhesive, a ground shield layer, a barrier layer, a pair of capacitive touch sensor layers separated by a substrate or other barrier layer, and a cover layer fixed to the second capacitive touch sensor layer by a suitable adhesive. The capacitive touch sensor layers can be any suitable material such as patterned indium tin oxide (ITO).

In the present example, the X and Y location of a touch event are both determined with the X location determined by a signal generated as a result of capacitive coupling with one of the touch sensor layers and the Y location determined by the signal generated as a result of capacitive coupling with the other of the touch sensor layers. Each of the touch-sensor layers provides a signal to the controller 36 as a result of capacitive coupling with a suitable object such as a finger of a user or a conductive object held in a bare hand of a user resulting in a change in the electric field of each of the touch sensor layers. The signals represent the respective X and Y touch location values. It will be appreciated that other attributes of the user's touch on the touch screen display 38 can be determined. For example, the size and the shape of the touch on the touch screen display 38 can be determined in addition to the location (X and Y values) based on the signals received at the controller 36 from the touch sensor layers.

Referring still to Figure 2, it will be appreciated that a user's touch on the touch screen display 38 is determined by determining the X and Y touch location and user-selected input is determined based on the X and Y touch location and the application executed by the processor 22. In the exemplary screen shown in the front view of Figure 2, the application provides the virtual keyboard 76 and the button of the virtual keyboard 76 selected by the user is matched to the X and Y touch location. Thus, the button selected by the user is determined based on the X and Y touch location and the application. In the example shown in Figure 2, the user enters text via the virtual keyboard 76, selecting letters from the virtual keyboard 76 by touching the touch screen display at the location of the letters in the virtual keyboard 76.

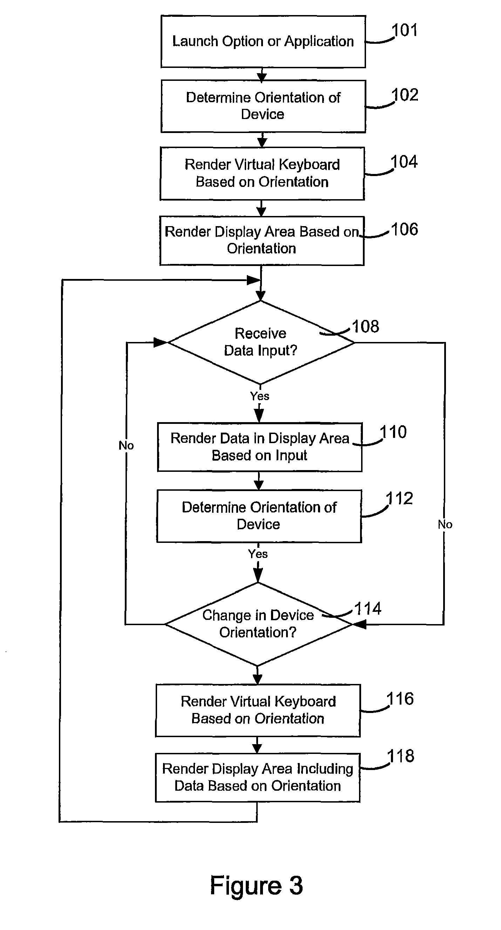

Reference is now made to Figure 3 to describe a method of controlling a portable electronic device in accordance with one embodiment. It will be appreciated that the steps of Figure 3 are carried out by routines or subroutines of software executed by the processor 22. Coding of software for carrying out such steps is well within the scope of a person of ordinary skill in the art having regard to the present description.

The processor 22 receives a user-selection of an application or an option within an application in which a virtual keyboard is rendered for user-entry of data. Such a user selection can be received by user touching the touch screen display 38 for selection of, for example, a Internet browser application, a new email composition option, an add new calendar entry option, or any other suitable application or option. The X and Y location of the touch event are determined and the selected option or application is determined and launched (step 101).

Next, the orientation of the portable electronic device 20 is determined based on input from the accelerometer 39. Thus, it is determined if the portable electronic device 20 is closest to a portrait orientation or a landscape orientation based on the orientation of the accelerometer 39 (step 102).

A virtual keyboard is then rendered based on the orientation of the accelerometer determined at step 102 (step 104). The orientation of the virtual keyboard that is rendered is dependent on the orientation as determined at step 102. Thus, if the portable electronic device 20 is in a landscape mode, a landscape mode virtual keyboard is rendered, If the portable electronic device 20 is in a portrait mode, a portrait mode virtual keyboard is rendered.

Along with the virtual, keyboard, a display area is rendered including a suitable screen displayed for the option or application launched with a data entry field or fields. The orientation of the display area is also dependent on the orientation of the accelerometer determined at step 102 (step 106). The display area can be rendered, for example, above the virtual keyboard in either the landscape orientation or the portrait orientation.

Next, it is determined if data input is received from the virtual keyboard, for example, for rendering as a result of user touching of any of the virtual buttons of the virtual keyboard (step 108). If input is received in the form of data for rendering, the process proceeds to step 110. If no input is received, the process proceeds to step 114.

At step 110, the data received as a result of user-entry of data on the virtual keyboard is displayed in the data entry field or fields within the display area rendered at step 106. The data is rendered in the same orientation as the virtual keyboard and the display area such that characters including letters, numbers or symbols entered by user selection from the virtual keyboard displayed on the touch screen display 38 are rendered in the same orientation as the letter, numbers or symbols displayed on the virtual keyboard.

At step 112, the orientation of the portable electronic device 20 (or the accelerometer 39) is again determined and at step 114 it is determined if there is a change in the orientation. Thus, it is again determined if the portable electronic device 20 is closest to a portrait orientation or a landscape orientation based on the orientation of the accelerometer 39 and, if the orientation is determined to have changed based on a comparison of the orientation determined at step 112 to the orientation determined previously, the process proceeds to step 116. If, on the other hand, the orientation is determined at step 114 to be the same as that previously determined, the process returns to step 108 where it is determined if data input is received. It will be appreciated that the portable electronic device 20 awaits receipt of data input from the virtual keyboard or a determination of a change in orientation.

At step 116, a new virtual keyboard is rendered based on the orientation of the portable electronic device 20 as determined by the orientation of the accelerometer. The orientation of the new virtual keyboard that is rendered is dependent on the orientation as determined at step 112. Thus, if the portable electronic device 20 is in a landscape mode, a landscape mode virtual keyboard is rendered. If the portable electronic device 20 is in a portrait mode, a portrait mode virtual keyboard is rendered.

A display area is also rendered in the new orientation along with data previously rendered at step 110. The orientation of the display area is again dependent on the orientation of the accelerometer determined at step 112. The data is rendered in the data field or fields in the same orientation as the newly rendered virtual keyboard (rendered at step 116) and the orientation of the newly rendered display area such that characters including letters, numbers or symbols previously displayed in the previous orientation are re-rendered in the same orientation as the letter, numbers or symbols displayedon the newly rendered virtual keyboard (step 118).

After rendering the display area along with the data in the new orientation, the process returns to step 108. It will be appreciated that again data can be entered by selection of letters, numbers or symbols from the virtual keyboard rendered at step 116 and the data is rendered in a field or fields of the display area in addition to any previously rendered data (step 110). The orientation of the portable electronic device 20 is again determined (step 112) and it is again determined if there is a change in the orientation of the portable electronic device 20 based on a comparison of the orientation determined at step 112 to the previously determined orientation.

It will also be appreciated that the steps of the method are not exhaustive. For example, the user can exit the method by pressing any suitable key such as an escape key, or selecting any suitable option such as a menu option.

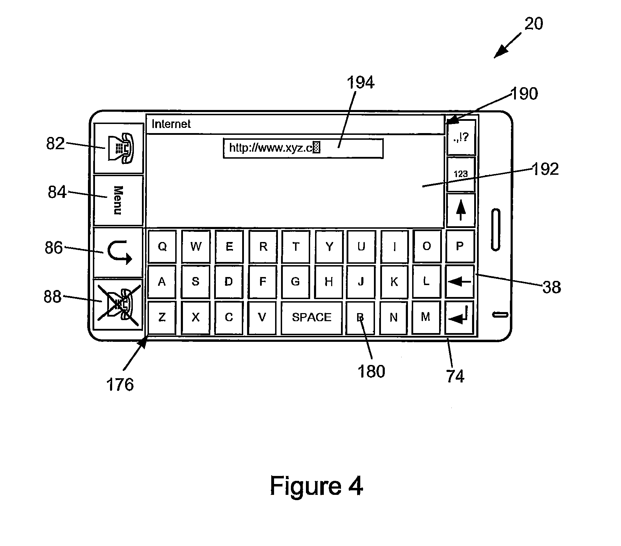

Continued reference is made to Figure 3 and to Figures 2 and 4 to describe an example of the method of controlling a portable electronic device 20 in accordance with the embodiment of Figure 3. The present example is provided for better understanding and is not intended to limit the scope of the present disclosure.

According to the present example, the processor 22 receives a user-selection of an Internet browser application for browsing the Internet by, for example, determination of a touch event at an Internet browser icon displayed on the touch screen display 38.

Next, the orientation of the portable electronic device 20 is determined based on input from the accelerometer 39. For the purpose of the present example, the portable electronic device 20 is in the portrait orientation as shown in Figure 2 (step 102).

The virtual keyboard is then rendered in the portrait mode as shown in Figure 2. In the present example, the portrait mode virtual keyboard 76 is a reduced QWERTY keyboard in which multiple alphabetical letters share virtual buttons 80. The virtual buttons 80 are rendered with the alphabetical letters and other keyboard buttons displayed in an upright position for the user. The portable electronic device 20 can be operated in any suitable mode for determining a user-desired one of the letters upon determination of a touch event on the respective one of the virtual buttons 80. For example, letters can be selected using a multi-tap mode, using a predictive text mode or using any other suitable mode. The portable electronic device 20 according to the present example also includes four physical buttons 82, 84, 86, 88 in the housing 74 for user-selection for performing functions or operations including an "off-hook" button 82 for placing an outgoing cellular telephone call or receiving an incoming cellular telephone call, a Menu button 84 for displaying a context-sensitive menu or submenu, an escape button 86 for returning to a previous screen or exiting an application, and an "on-hook" button for ending a cellular telephone call. The remainder of the buttons shown on the face of the exemplary portable electronic device of Figure 2 are virtual buttons 80 on the touch screen display 38.

Along with the virtual keyboard, a portrait mode display area 90 is rendered that includes a portrait mode Internet browser display screen 92. The display area is provided in the portrait mode as a result of determination of the orientation at the accelerometer (step 106). The display area is rendered above the portrait mode virtual keyboard 76 when the portable electronic device 20 is in the portrait orientation.

Next, it is determined if data input is received from the virtual keyboard, for example, for rendering as a result of user touching of any of the virtual buttons of the virtual keyboard (step 108). If input is received in the form of data for rendering, the process proceeds to step 110. If no input is received, the process proceeds to step 114. As shown, input is received in the form of user selection of characters including letters and symbols by touching ones of the virtual buttons 80 in the portrait mode virtual keyboard 76. In the example shown in Figure 2, the user enters "http://www.xyz.c" and the data received is displayed in a data entry field 94 of the portrait mode Internet browser display screen 92 (step 110).

When entering data, the user turns the portable electronic device 20 to a landscape orientation. It will be appreciated from the present description that a user may choose to turn the portable electronic device 20 to a different orientation to provide a different keyboard such as to change from a reduced keyboard to a full QWERTY keyboard as in the present example. In another example, the user may also choose to turn the portable electronic device 20 to provide a different display area for the application.

At step 112, the orientation of the portable electronic device 20 is again determined by determining input from the accelerometer 39 and at step 114 it is determined that there is a change in the orientation. Thus, at step 112, it is determined that the portable electronic device 20 is closest to a landscape orientation based on the orientation of the accelerometer 39 and it is therefore determined that the orientation is different from the previous portrait orientation (step 114).

At step 116, a new virtual keyboard is rendered in the landscape mode. A suitable landscape mode virtual keyboard 176 is shown in Figure 4. As shown, virtual buttons 180 are rendered in a full QWERTY keyboard on the touch screen display 38 of the portable electronic device 20.

A display area is also rendered in the new orientation along with data previously rendered at step 110. Thus, a landscape mode display area 190 is rendered including a landscape mode Internet browser display screen 92 (step 118). The data previously rendered in the data entry field 94 in the Internet browser display screen 92 of Figure 2 is also rendered in a data entry field 194 in the Internet browser display screen 192 of Figure 4. Thus, the display screen provided along with the data rendered is based on the application or option executed and data entered in the previous orientation.

After rendering the display area along with the data in the new orientation, the process returns to step 108. It will be appreciated that again data can be entered by selection of characters such as letters, numbers or symbols from the landscape mode virtual keyboard 176 rendered at step 116 and the data is rendered in the landscape mode display area 190 in addition to the previously rendered data (step 110). Thus, the user can complete entry of the data in the data entry field 194.

The orientation of the portable electronic device 20 can be changed to the portrait mode to render the portrait mode virtual keyboard 76 along with the portrait mode display area 90 as desired. The orientation is again determined (step 112) and it is determined that there is a change in the orientation of the portable electronic device 20 based on a comparison of the orientation determined at step 112 to the previously determined orientation.

In another example, the portable electronic device 20 is held in the landscape orientation when the option or application is launched at step 101. Based on the determination of the orientation at step 102, the landscape mode virtual keyboard 176 is rendered along with the landscape mode display area 190 (steps 104, 106). Data input is received as a result of user-touching the touch screen display 38 at desired virtual buttons 180 of the landscape mode virtual keyboard 176 (step 108). The data is rendered in the data entry field 194 of the Internet browser display screen 192. A change in orientation of the portable electronic device 20 from the landscape orientation to the portrait orientation is detected as a result of determination of the orientation of the device at step 112 and determination of the change based on the comparison at step 114. The portrait mode virtual keyboard 76 is then rendered (step 116) along with the portrait mode display area 90 including the data previously entered and displayed in the landscape mode display area 90.

In other examples, the option or application launched at step 101 can be, for example, an option to create a new calendar appointment in the calendar application, an option to create a new contact in the address book application, an option to create a new memo in a memo application, an option to create a new task in a task list application, an option to create a new message in a messaging application such as an email application, or any other suitable option or application. The remainder of the steps as described with reference to Figure 3 are similar to those described above and are therefore not further described herein.

In each case, the orientation of the portable electronic device 20 can be changed after entering data in a data entry field on the touch screen display 38 and a virtual keyboard is rendered based on the orientation of the portable electronic device 20. The display is also rendered based on the orientation of the portable electronic device 20 and data previously entered in a data entry field or fields is rendered in similar fields in the new orientation. Thus, a user can change the orientation of the portable electronic device 20 to provide a desired virtual keyboard orientation or a desired display area at any time in the application, without losing data previously entered in a data entry field or fields. The orientation is also changed automatically without requiring user interaction with the device before or after changing the orientation. This saves the user time in that additional user interaction is not required and data is not lost while still providing the desired orientation. Thus, data does not need to be re-entered after a change in the orientation, reducing user-interaction time and thereby increasing battery life of the portable electronic device 20.

It will be appreciated that the present disclosure is not limited to the use of the virtual keyboards shown as many other keyboard types are possible including, for example, other reduced keyboards or other full keyboards in either of the orientations.

While the embodiments described herein are directed to particular implementations of the portable electronic device and the method of controlling the portable electronic device, it will be understood that modifications and variations may occur to those skilled in the art. All such modifications and variations are believed to be within the sphere and scope of the present disclosure.

Aspects and features of the present disclosure are set out in the following numbered clauses which contain the subject matter of the claims of the parent application as filed.

Clauses:
1. A method of controlling a portable electronic device comprising a touchscreen display, the method comprising:
   determining a first orientation of the portable electronic device;
   rendering a first virtual keyboard and a first data display area on the touchscreen display based on the first orientation of the portable electronic device;
   automatically detecting a change from the first orientation to a second orientation of the portable electronic device; and
   automatically reconfiguring the touchscreen display by rendering a second virtual keyboard, a second data display area, and data previously displayed in the first data display area in the second data display area on the touchscreen display based on the second orientation of the portable electronic device.
2. The method according to clause 1, wherein said data previously displayed in the first data display area comprises data displayed in a data entry field in the first data display area and said data is rendered in the second data display area in a corresponding second data entry field.
3. The method according to clause 1 or clause 2, wherein determining a first orientation of the portable electronic device comprises determining a landscape orientation or a portrait orientation and wherein rendering the first virtual keyboard and a first data display area comprises rendering in a corresponding landscape mode or a portrait mode.
4. The method according to clause 3, wherein detecting the change comprises determining the second orientation, and wherein determining the second orientation comprises determining the other of the landscape orientation or the portrait orientation and automatically rendering the second virtual keyboard and the second data display area along with data previously displayed comprises rendering in the other of the landscape mode or the portrait mode.
5. The method according to clause 3 or clause 4, wherein rendering in the landscape mode comprises rendering a full keyboard having a respective virtual button for each alphabetical letter.
6. The method according to clause 3 or clause 4, wherein rendering in the landscape mode comprises rendering a full QWERTY keyboard
7. The method according to any one of clauses 3 to 5, wherein rendering in the portrait mode comprises rendering a reduced keyboard.
8. The method according to any one of the preceding clause, wherein detecting the change comprises determining the second orientation and comparing the second orientation to the first orientation to determine the change from the first orientation to the second orientation.
9. A portable electronic device comprising:
   a housing;
   a touch-sensitive input and display device connected to the housing and exposed for user-interaction therewith; and
   functional components in the housing comprising an accelerometer, a memory device, and a processor operably connected to the touch-sensitive input and display device, the accelerometer, and the memory device for executing a program stored in the memory to cause the portable electronic device to implement the steps of the method of any one of clauses 1 to 8.
10. A computer-readable medium having computer-readable code embodied therein for execution by a processor in a portable electronic device to cause the portable electronic device to implement the steps of the method of any one of clauses 1 to 8.

## Claims

1. A method comprising:
while a portable electronic device is in a first orientation:
displaying, according to the first orientation, a first data entry field in a first data display area and displaying entered data in the first data entry field;
automatically detecting a change in orientation of the portable electronic device to a second orientation;
in response to the detecting, automatically rendering, based on the second orientation of the portable electronic device, a second data entry field in a second data display area and rendering the entered data in the second data entry field.

2. The method of claim 1, further comprising:
while the portable electronic device is in a first orientation, displaying, according to the first orientation, a first virtual keyboard;
in response to the detecting, automatically rendering, based on the second orientation of the portable electronic device, a second virtual keyboard.

3. The method of claim 1, wherein the change to the second orientation is automatically detected during a process of data entry of the entered data in the first data entry field via a first virtual keyboard rendered in the first orientation.

4. The method of claim 1, wherein the first orientation and the second orientation comprise a portrait orientation and a landscape orientation.

5. The method of claim 1, wherein one of the first orientation and the second orientation comprises a portrait orientation, further comprising rendering a reduced keyboard.

6. The method of claim 5, wherein the reduced keyboard comprises multiple virtual buttons, wherein multiple characters share a virtual button for a plurality of the multiple virtual buttons.

7. The method of claim 1, wherein one of the first orientation and the second orientation comprises a landscape orientation, further comprising rendering a full keyboard having a respective virtual button for each alphabetic letter.

8. A computer-readable medium having computer-readable code for execution by a processor in a portable electronic device to cause the portable electronic device to perform the method of any one of claims 1 to 6.

9. A portable electronic device comprising:
a display disposed in a housing;
a processor operably coupled to the display and configured to:
while the portable electronic device is in a first orientation:
display, according to the first orientation, a first data entry field in a first data display area;
display entered data in the first data entry field;
automatically detect a change in orientation of the portable electronic device to a second orientation;
in response to the detecting:
automatically render, based on the second orientation of the portable electronic device, a second data entry field in a second data display area;
render the entered data in the second data entry field.

10. The portable electronic device of claim 9, wherein the processor is further configured to:
while the portable electronic device is in a first orientation, display, according to the first orientation, a first virtual keyboard;
in response to the detecting, automatically render, based on the second orientation of the portable electronic device, a first virtual keyboard.

11. The portable electronic device of claim 9, wherein the change to the second orientation is automatically detected during a process of data entry of the entered data in the first data entry field via a first virtual keyboard rendered in the first orientation.

12. The portable electronic device of claim 9, wherein the processor is further configured to display and render on a touchscreen display of the portable electronic device.

13. The portable electronic device of claim 9, wherein one of the first orientation and the second orientation comprises a portrait orientation, further comprising rendering a reduced keyboard.

14. The portable electronic device of claim 13, wherein the reduced keyboard comprises multiple virtual buttons, wherein multiple characters share a virtual button for a plurality of the multiple virtual buttons.

15. The portable electronic device of claim 9, wherein one of the first orientation and the second orientation comprises a landscape orientation, wherein the processor is further configured to comprise rendering a full keyboard having a respective virtual button for each alphabetic letter.
